# DEMANDE DE BREVET EUROPEEN

(11) **EP 2 822 158 A2**
(43) Date de publication de la demande: **07.01.2015**
(21) Numéro de dépôt: 14305789.1
(22) Date de dépôt: 27.05.2014
(51) Int. Cl.: H02K 15/16

(54) **Procédé d'assemblage d'une machine électrique à flux axial**

(30) Priorité: 05.06.2013 FR 1355184
(71) Demandeur: Renault S.A.S., 92100 Boulogne-Billancourt (FR)
(72) Inventeur: Devambe, David, 78450 VILLEPREUX (FR); Lassalas, Patrick, 91150 MORIGNY-CHAMPIGNY (FR); Chuler, Fabien, 91660 MEREVILLE (FR)

(57) **Abrégé**

L'invention concerne un procédé d'assemblage d'une machine électrique à structure discoïde, comportant au moins un disque rotor (1) et stator (2, 3) disposés coaxialement et formant au moins un entrefer (e1, e2). Selon l'invention, une étape d'ajustement dudit entrefer comprend une opération itérative (E3) consistant à chaque itération :
- à déplacer axialement ledit disque rotor (1) dans une position axiale prédéterminée (Xi),
- à entraîner en rotation ledit disque rotor (1) dans ladite position axiale,
- à mesurer une valeur de couple résistant (Ci) résultant de la mise en rotation dudit disque rotor (1) dans ladite position axiale (Xi), et
- à mémoriser ladite valeur de couple (Ci) pour ladite position axiale (xi), ladite étape d'ajustement comprenant une étape (E5) de sélection de la position axiale minimisant le couple résistant et une étape (E2) de blocage axial dudit disque rotor dans ladite position axiale sélectionnée.

## Description

La présente invention concerne le domaine des machines électriques à flux axial, également nommées machines électriques à structure discoïde. Elle concerne plus particulièrement un procédé d'assemblage d'une telle machine comportant au moins un disque rotor et stator disposés coaxialement et formant au moins un entrefer, du type comportant une étape d'ajustement dudit au moins un entrefer.

De façon générale, les machines électriques de structure discoïde comprennent au moins un stator en forme de disque maintenu sur une carcasse et dont la partie centrale est généralement évidée, ainsi qu'un rotor également en forme de disque, monté sur un arbre dont l'axe de rotation coïncide avec l'axe du disque stator. Les avantages particuliers liés à ces machines sont notamment la compacité associée à un rendement élevé.

Dans la littérature, différentes topologies de machines à flux axial sont connues. On connaît ainsi les machines discoïdes simple face comprenant un disque rotor monté en rotation sur l'arbre de la machine et un disque stator relié à la carcasse et centré sur l'axe de l'arbre. On connaît également les machines discoïdes double faces, comprenant un disque stator, placé entre deux disques rotor, les bobinages des disques rotor et stator étant placés sur des faces en regard, le disque stator étant équipé d'enroulement sur ses deux faces (machines discoïdes dites à stator intérieur). Cette dernière topologie de machines regroupe également les machines électriques à structure discoïde, dans lesquelles un disque rotor est placé entre deux disques stator, les bobinages des disques rotor et stator étant placés sur des faces en regard, le disque rotor étant équipé d'aimants ou d'enroulement sur ses deux faces (machines discoïdes dites à rotor intérieur).

Egalement, toutes les machines discoïdes, qu'elles soient à simple face ou double face, peuvent être comme dans le cas des machines à flux radial, à stator encoché ou lisse ou bien encore de type présentant une saillance magnétique ou pas.

Quelle que soit la topologie de la machine électrique de type discoïde, un réglage précis de l'entrefer stator-rotor est nécessaire, de la phase de calcul et conception jusqu'à la phase d'assemblage de la machine, dans la mesure où cette valeur d'entrefer a une répercussion directe sur les performances de la machine.

Dans le cas d'une machine comportant au moins trois disques rotor et stator disposés coaxialement, par exemple telle que les machines à double stator, les faces des disques stator et rotor sont séparées par deux entrefers, respectivement gauche et droit et, au moment du montage, les dimensions de ces entrefers sont prévues approximativement égales. En effet, un déséquilibre entre les entrefers génère un effort axial asymétrique, ayant un impact défavorable sur le rendement de la machine d'un point de vue strictement électromagnétique, mais aussi sur les contraintes mécaniques s'exerçant sur les éléments de guidage (paliers, roulements à billes, etc.) et génère en outre un couple de traînée nuisible au rendement global de la machine. Or, dans ce type de machine, le rotor peut présenter des décalages axiaux par rapport au stator, en raison des tolérances mécaniques d'usinage et de montage des différents éléments. On constate également que les dimensions de l'entrefer peuvent varier, du fait des dilatations thermiques des matériaux et des efforts mécaniques. Ainsi, du fait des variations dimensionnelles apparaissant à l'intérieur de la machine discoïde, les forces engendrées au niveau de chaque entrefer ne s'annulent pas en pratique et, pendant le fonctionnement de la machine, des efforts axiaux importants apparaissent sur le rotor et le stator pouvant entraîner la détérioration de la machine.

On connaît du document de brevet WO2006005796, une méthode d'assemblage d'une machine synchrone à aimant permanent à flux axial, permettant de réaliser un réglage de l'entrefer de la machine. Cette méthode est basée sur le fait que l'attraction magnétique entre le rotor et le stator génère une force axiale et que cette force peut être calculée au préalable pour toutes les dimensions d'entrefer possibles. Ainsi, en mesurant la force magnétique générée par le rotor sur le stator lors de leur rapprochement, sachant que cette force est directement liée à la dimension de l'entrefer, il est possible de déterminer la dimension de l'entrefer de la machine simplement en comparant la force mesurée à la force théorique préalablement calculée pour toutes les dimensions possibles d'entrefer. Ainsi, il est possible d'ajuster la position axiale du rotor à la dimension prévue d'entrefer.

Cependant, cette méthode d'ajustement de la dimension de l'entrefer n'est pas entièrement satisfaisante, puisqu'elle ne permet pas d'intégrer au circuit de mesure les pertes liées au fonctionnement de la chaîne cinématique globale de la machine, incluant notamment les roulements à billes, les joints potentiellement sources de frottement, etc.

Dans ce contexte, la présente invention a pour but de pallier ces inconvénients en proposant un procédé d'assemblage d'une machine électrique à structure discoïde permettant de réaliser un ajustement plus précis de l'entrefer.

A cette fin, la présente invention propose un procédé d'assemblage d'une machine électrique à structure discoïde, comportant au moins un disque rotor et stator disposés coaxialement et formant au moins un entrefer, ledit procédé comprenant une étape d'ajustement dudit au moins un entrefer, caractérisé en ce que ladite étape d'ajustement comprend une opération itérative consistant à chaque itération :
- à déplacer axialement ledit disque rotor dans une position axiale prédéterminée,
- à entraîner en rotation ledit disque rotor dans ladite position axiale,
- à mesurer une valeur de couple résistant résultant de la mise en rotation dudit disque rotor dans ladite position axiale, et
- à mémoriser ladite valeur de couple résistant pour ladite position axiale,
ladite étape d'ajustement comprenant en outre une étape de sélection de la position axiale minimisant le couple résistant et une étape de blocage axial dudit disque rotor dans ladite position axiale sélectionnée.

Ce procédé consistant à réaliser des mesures de couple résistant résultant de l'entraînement en rotation du rotor à chaque itération de déplacement axial du rotor, permet avantageusement de tenir compte de toute la chaîne cinématique pour la mise au point de l'entrefer. Ainsi, cette solution est basée sur un mode de fonctionnement « pièces tournantes » et offre donc une plus grande précision dans l'ajustement de l'entrefer, puisque toutes les pertes sont intégrées dans la mesure. Au final, le type de mesure proposée par la présente invention permet d'avoir une image fonctionnelle de l'entrefer par la valeur du couple résistant du rotor et ainsi, sans avoir à réaliser des métrologies complexes sur chacun des composants de la machine.

Selon d'autres caractéristiques avantageuses du procédé conforme à l'invention, prises isolément ou en combinaison :
- à chaque itération de déplacement axial, on déplace axialement ledit disque rotor selon un pas fixe de déplacement axial prédéterminé ;
- à chaque itération de déplacement axial, on déplace axialement ledit disque rotor suivant un signal périodique sinusoïdal ;
- l'étape de blocage axial est précédée d'une étape préalable de test consistant à vérifier que la valeur de couple pour ladite position axiale sélectionnée est inférieure à une valeur cible prédéterminée du couple ;
- lorsque la position axiale minimisant le couple résistant est sélectionnée, ledit disque rotor est calé dans ladite position sélectionnée au moyen d'une cale d'épaisseur correspondant à la valeur du déplacement axial auquel ledit couple a été mesuré ;
- lorsque la position axiale minimisant le couple résistant est sélectionnée, ledit disque rotor est calé dans ladite position sélectionnée au moyen d'écrous de serrage asservis en position dans ladite position sélectionnée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique d'un exemple d'ensemble rotor/stator d'une machine discoïde sur laquelle peut être appliqué le procédé d'assemblage conforme à la présente invention pour la mise au point de l'entrefer;
- la Figure 2 est un organigramme du procédé d'assemblage conforme à la présente invention;
- la Figure 3 illustre un premier exemple de cycle de mesure fournissant les positions axiales du rotor où les mesures de couple résistant peuvent être effectuées ;
- la Figure 4 illustre un deuxième exemple de cycle de mesure fournissant les positions axiales du rotor où les mesures de couple résistant peuvent être effectuées.

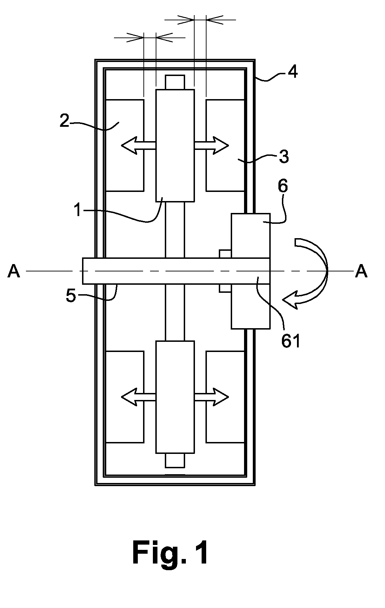

La figure 1 représente schématiquement un exemple de machine électrique à structure discoïde à double stator, dite machine MFADS (Machine à Flux Axial à Double Stator), comprenant un disque rotor central 1 et un stator constitué de deux disques 2 et 3. Chaque disque stator 2, 3 est maintenu, par des moyens mécaniques classiques, sur une carcasse 4. Ils présentent une partie centrale évidée et sont centrés sur l'axe A-A de la machine. Le disque rotor 1, disposé entre les deux disques stator 2, 3, est monté solidaire d'un arbre 5 d'entraînement, qui traverse la partie centrale évidée du stator et dont l'axe coïncide avec l'axe A-A de la machine. L'arbre 5 d'entraînement du rotor est monté rotatif autour de l'axe A-A, par l'intermédiaire d'un palier 6 constitué de préférence par un roulement.

Entre la face interne des disques stator 2, 3 et les faces externes du disque rotor 1, il subsiste un entrefer, respectivement e1 et e2. Ces deux entrefers sont théoriquement de même valeur de part et d'autre du disque rotor 1. Cependant, en raison des écarts de tolérance de fabrication et du process d'assemblage, la valeur des entrefers est en pratique différente.

La problématique qui se pose alors est d'ajuster la valeur de l'entrefer, afin de minimiser le déséquilibre axial. Selon l'invention, une fois la machine assemblée, on se propose de mesurer le couple de traînée du rotor 1, dit autrement le couple résistant, qui résulte en particulier du frottement entre la surface externe de l'arbre 5 d'entraînement et la surface de friction 61 de l'alésage du palier ou roulement 6, lorsque le rotor 1 est entraîné en rotation et ce, en procédant par itération, selon plusieurs itérations de déplacement axial du rotor 1, jusqu'à obtention d'une valeur de couple résiduel acceptable, qui soit représentative du caractère symétrique de l'entrefer, c'est-à-dire d'une configuration d'entrefer où la valeur de l'entrefer gauche e1 est égale ou sensiblement égale à celle de l'entrefer droit e2. En effet, lorsque l'on s'écarte de cette configuration, les efforts axiaux asymétriques, qui sont alors générés de part et d'autre du rotor 1, impactent le chargement mécanique sur les éléments de guidage, en particulier le palier ou roulement 6, générant le couple de traînée du rotor. Aussi, il y a un lien direct entre l'existence et la valeur du couple de trainée du rotor et la configuration d'entrefer, que le procédé de l'invention se propose d'exploiter.

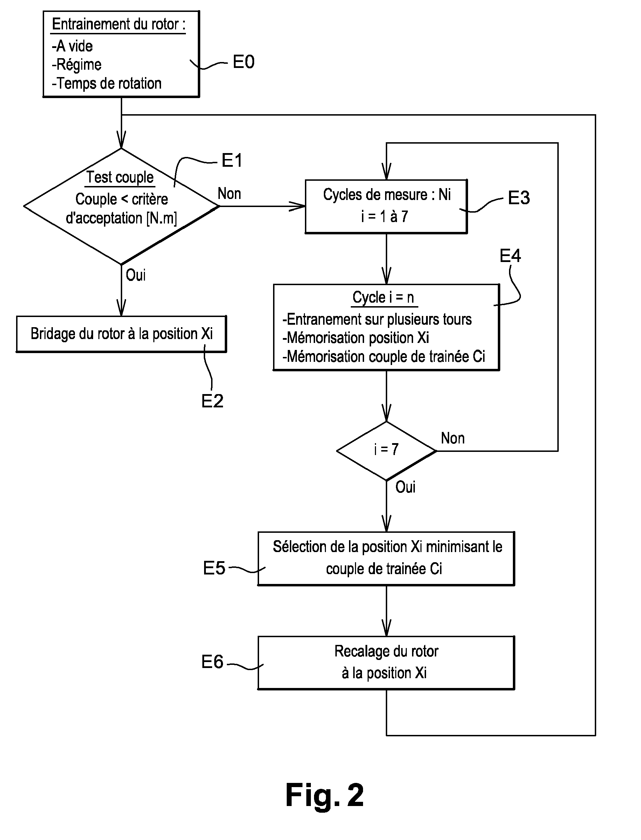

Pour ce faire, le procédé consiste à rechercher, une fois la machine assemblée, la meilleure position axiale pour le rotor 1 le long de l'axe A-A de la machine, c'est-à-dire la position axiale apte à optimiser le couple de traînée et partant, assurant l'ajustement souhaité de l'entrefer subsistant entre la face interne des disques stator 2, 3 et les faces externes du disque rotor 1. Les étapes du procédé vont être décrites plus en détail en référence à l'organigramme de la figure 2.

Lors de l'assemblage de la machine, l'arbre 5 d'entraînement doit pouvoir translater librement le long de son axe par rapport à la carcasse 4 pour permettre le déplacement axial du rotor 1. En outre, le déplacement axial du rotor 1 est préférentiellement piloté par un moteur linéaire, apte à provoquer le déplacement axial du rotor 1 dans les deux directions le long de l'axe A-A de la machine depuis une position axiale initiale d'assemblage.

Initialement, lors d'une étape E0, une fois la machine assemblée, le rotor 1 est entraîné en rotation dans sa position axiale initiale d'assemblage, puis on mesure le couple résistant du rotor 1 dans cette position axiale initiale d'assemblage par des moyens connus en soi et on vérifie lors d'une étape de test E1 si la valeur mesurée du couple résistant est inférieure à une valeur cible prédéterminée de couple, correspondant à une valeur de couple résistant acceptable, représentative d'une configuration d'entrefer apte à minimiser le déséquilibre axial. Si la vérification est positive, lors d'une étape E2 de bridage du rotor 1, l'assemblage de la machine est terminé en réalisant un blocage axial du rotor 1 au moyen d'une pièce interface mécanique apte à fixer le rotor 1 dans la position axiale initiale d'assemblage.

Par contre, si la vérification s'avère être négative, on déclenche une opération itérative à l'étape E3. Plus précisément, à partir de la position axiale initiale d'assemblage, on procède par itérations au cours desquelles on va effectuer une succession de mesures de couple résistant du rotor correspondant à différentes positions axiales successives du rotor résultant du déplacement axial du rotor suivant un cycle de mesure prédéterminé. Ainsi, lors d'une étape E4, à chaque itération Ni de déplacement axial du rotor, on génère un déplacement axial du rotor, de sorte à placer le rotor dans une position axiale prédéterminée Xi, on entraîne le rotor en rotation sur plusieurs tours dans cette position axiale prédéterminée Xi et on mesure la valeur du couple résistant Ci résultant de la mise en rotation du rotor. Cette valeur de couple résistant Ci correspondant à ladite position axiale prédéterminée Xi est alors mémorisée. On répète ce processus à chaque itération de déplacement axial du rotor suivant un cycle de mesure prédéterminé.

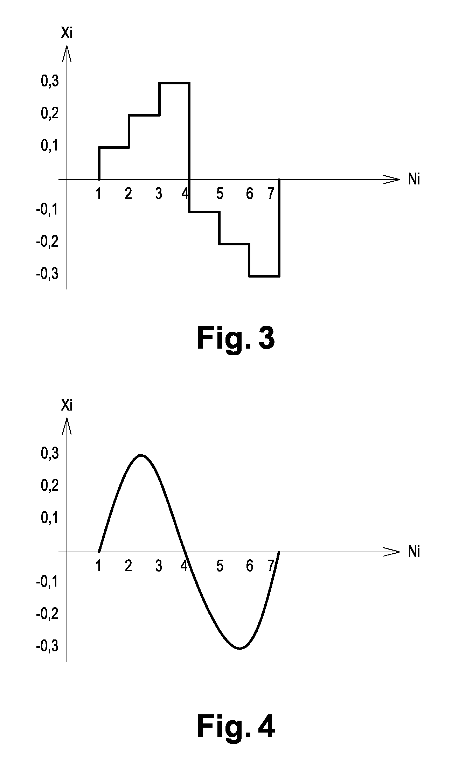

La figure 3 présente un exemple de cycle de mesure fournissant les différentes positions axiales du rotor auxquelles les mesures de couple résistant peuvent être effectuées. Selon cet exemple, à chaque itération de déplacement axial, on déplace axialement le rotor par pas fixe de 0,1 mm par exemple, ce déplacement pouvant s'opérer dans un sens comme dans l'autre depuis la position axiale initiale d'assemblage. Cependant, la valeur du pas sera idéalement déterminée en correspondance aux besoins de la machine à assembler. Selon l'exemple de la figure 3, le cycle de mesure permet ainsi de mesurer le couple résistant du rotor sur une plage de déplacement axial de 0,3 mm autour de la position axiale initiale d'assemblage par pas de 0,1 mm axialement.

En variante, les différentes positions axiales du rotor pour lesquelles les mesures de couple résistant doivent être effectuées, peuvent être établies en commandant le déplacement axial du rotor suivant un signal périodique sinusoïdal tel qu'illustré à la figure 4.

Ensuite, au terme de ce processus itératif, lors d'une étape E5, on sélectionne la position axiale Xi minimisant le couple résistant Ci et par conséquent, le déséquilibre axial. La position axiale ainsi sélectionnée procure donc un ajustement optimal de la valeur d'entrefer de la machine. Lorsque la sélection de la position Xi est effectuée, une étape E6 de calage du rotor à la position sélectionnée Xi est mise en oeuvre, avant de pouvoir terminer l'assemblage de la machine. Cette étape de calage pourra être réalisée au moyen de cales d'épaisseur ou, en variante, à l'aide d'écrous de serrage.

Ainsi, une fois la sélection effectuée, selon cette étape de calage, on introduit des cales, dont l'épaisseur correspond à la valeur du pas d'itération de déplacement axial, sur l'une des faces du rotor, puis on termine l'assemblage comme décrit en référence à l'étape E2, en réalisant le blocage axial du rotor sur la pièce interface mécanique destinée à cet effet.

Cette dernière étape E2 de blocage axial est préférentiellement précédée de l'étape E1 de test consistant à vérifier que la valeur de couple mémorisée pour la position axiale sélectionnée au terme du processus itératif est bien inférieure à la valeur cible de couple prédéterminée.

Bien que la description qui précède concerne l'ajustement de l'entrefer pour la machine à flux axial à double stator, il convient de noter que la solution décrite ne se limite pas à ce type de machine spécifiquement, mais peut être utilisée plus largement pour la mise au point de l'entrefer dans n'importe quel type de machine à flux axial, en particulier à simple face ou double face et cela, quel que soit la technologie de la machine : asynchrone à flux axial, à aimant à flux axial, à rotor bobiné à flux axial, à courant continu à flux axial, à reluctance variable à flux axial.

## Revendications

1. Procédé d'assemblage d'une machine électrique à structure discoïde, comportant au moins un disque rotor (1) et stator (2, 3) disposés coaxialement et formant au moins un entrefer (e1, e2), ledit procédé comprenant une étape d'ajustement dudit au moins un entrefer, **caractérisé en ce que** ladite étape d'ajustement comprend une opération itérative (E3) consistant à chaque itération :
- à déplacer axialement ledit disque rotor (1) dans une position axiale prédéterminée (Xi),
- à entraîner en rotation ledit disque rotor (1) dans ladite position axiale,
- à mesurer une valeur de couple résistant (Ci) résultant de la mise en rotation dudit disque rotor (1) dans ladite position axiale (Xi), et
- à mémoriser ladite valeur de couple (Ci) pour ladite position axiale (xi), ladite étape d'ajustement comprenant une étape (E5) de sélection de la position axiale minimisant le couple résistant et une étape (E2) de blocage axial dudit disque rotor dans ladite position axiale sélectionnée.

2. Procédé selon la revendication 1, **caractérisé en ce que**, à chaque itération de déplacement axial, on déplace axialement ledit disque rotor (1) selon un pas fixe de déplacement axial prédéterminé.

3. Procédé selon la revendication 1, **caractérisé en ce que**, à chaque itération de déplacement axial, on déplace axialement ledit disque rotor (1) suivant un signal périodique sinusoïdal.

4. Procédé selon l'une quelconque des revendications précédentes, **caractérisé en ce que** l'étape (E2) de blocage axial est précédée d'une étape (E1) préalable de test consistant à vérifier que la valeur de couple pour ladite position axiale sélectionnée est inférieure à une valeur cible prédéterminée du couple.

5. Procédé selon l'une quelconque des revendications précédentes, **caractérisé en ce que** lorsque la position axiale minimisant le couple résistant est sélectionnée, ledit disque rotor est calé (E6) dans ladite position sélectionnée au moyen d'une cale d'épaisseur correspondant à la valeur du déplacement axial auquel ledit couple a été mesuré.

6. Procédé selon l'une quelconque des revendications 1 à 4, **caractérisé en ce que** lorsque la position axiale minimisant le couple résistant est sélectionnée, ledit disque rotor est calé (E6) dans ladite position sélectionnée au moyen d'écrous de serrage asservis en position dans ladite position sélectionnée.
